# EUROPÄISCHE PATENTANMELDUNG

(11) **EP 0 867 216 A1**
(43) Veröffentlichungstag der Anmeldung: **30.09.1998**
(21) Anmeldenummer: 98104968.7
(22) Anmeldetag: 19.03.1998
(51) Int. Cl.: B01D 46/52

(54) **Filterelement aus einem flexiblen, zick-zack-förmig gefalteten Filtermaterial und Verfahren zu dessen Herstellung**

(30) Priorität: 29.03.1997 DE 19713238
(71) Anmelder: VORWERK & CO. INTERHOLDING GmbH, 42275 Wuppertal (DE)
(72) Erfinder: Krapp, Jan Thomas, 42399 Wuppertal (DE)
(74) Vertreter: Müller, Enno, Dipl.-Ing.

(57) **Zusammenfassung**

Die Erfindung betrifft ein Filterelement aus einem im wesentlichen biegeschlaffen Filterwerkstoff (2), wie etwa Vlies oder Gewebe, wie bspw. Glasfasergewebe, wobei der Filterwerkstoff (2) zick-zackförmig unter Ausbildung von Knickzonen (3) gefaltet ist und Flächen-Versteifungselemente (4, 4') etwa in Form von Kleberraupen (K) aufweist. Um ein Filterelement der in Rede stehenden Art anzugeben, welches strömungstechnisch verbessert ausgestaltet ist, wird vorgeschlagen, daß die Versteifungselemente (4, 4') die Knickzonen (3) aussparen.

## Beschreibung

Die Erfindung betrifft zunächst ein Filterelement aus einem im wesentlichen biegeschlaffen Filterwerkstoff, wie etwa Vlies oder Gewebe, wie bspw. Glasfasergewebe, wobei das Filtermaterial zick-zackförmig unter Ausbildung von Knickzonen gefaltet ist und Flächen-Versteifungselemente etwa in Form von Kleberraupen aufweist.

Derartige Filterelemente sind in den verschiedensten Ausführungsformen bekannt. Ob des hohen Druckverlustes und der niedrigen optimalen Anströmgeschwindigkeit von bspw. Glasfaservliesen, werden in Filter, die diese Vliese oder andere biegeschlaffe Filterwerkstoffe als Filtermedien nutzen, große Filterflächen im Verhältnis zur typischen Querschnittsfläche eines anwendungstypischen Strömungskanals verwendet. Dm nicht Filterelemente einsetzen zu müssen, welche groß gegen die typische Strömungs-Querschnittsdimension einer Anlage, wie bspw. eine klima- und reinraumtechnische Anlage, Staubsauger, Dunstabzugshaube usw., sind, werden die Vliese zu Paketen verarbeitet, indem sie plissiert werden. Dieses Plissieren geschieht entweder durch sogenannte Messerfaltung, bei denen das Vlies oder Gewebe mittels zweier Platten in den späteren Faltenenden umgebogen wird, oder durch sogenanntes Prägefalten, bei dem der Filterwerkstoff in der späteren Knickstelle der Falte lediglich durch starken Druck verändert wird. Das Aufstellen der Falten geschieht in diesem Fall dadurch, daß die mit Prägungen versehene Bahn gegen einen Widerstand geschoben wird und jeweils um die Faltenhöhe quer zur Schubrichtung ausweicht. Damit die Falten sich im Luftstrom nicht aneinanderlegen, werden diese mit Abstandshaltern bzw. Versteifungselementen gegeneinander abgestützt. Hier finden neben gewellten Abstandshaltern wie bspw. Aluminiumstreifen vor allem Linien oder Raupen aus Kunststoff, wie bspw. PVC Verwendung. Um ein strömungstechnisch günstigeres Faltenbild zu erhalten, werden diese Raupen teilweise intermittierend ausgeführt.

Eine solche Lösung ist bspw. aus der GB 1 594 700 bekannt. Hier wird der Filterwerkstoff vor einer Faltelung oberseitig mit durchgehenden Linien aus Polyester oder PVC versehen, welche nach Aufstellen der Falten den Abstand zwischen diesen gewährleisten sollen.

Im Hinblick auf den vorbeschriebenen Stand der Technik wird eine technische Problematik der Erfindung darin gesehen, ein Filterelement der in Rede stehenden Art anzugeben, welches strömungstechnisch verbessert ausgestaltet ist.

Diese Problematik ist zunächst und im wesentlichen beim Gegenstand des Anspruchs 1 gelöst, wobei darauf abgestellt ist, daß die Versteifungselemente die Knickzonen aussparen. Hierdurch ergibt sich der wesentliche Vorteil, daß die Asymmetrie zwischen den späteren Knickzonen, welche bevorzugt durch einen Prägeprozeß oder dergleichen gegenüber dem Ursprungsvlies bzw. -gewebe geschwächt und somit weniger biegeresistent gemacht wurden, und den späteren Faltenflächen vor dem Aufstellen der Falten erhöht wird. Für das strömungstechnisch günstige Aufstellen der Falten wird eine möglichst hohe Asymmetrie im Filterwerkstoff zwischen den späteren Knickzonen und den späteren Faltenflächen benötigt. Insbesondere beim Prägeverfahren, bei dem die Asymmetrie nur durch Prägen und nicht durch ein tatsächliches Knicken wie beim Messerfaltverfahren erreicht wird, behindert somit jede Störung dieser Asymmetrie das strömungstechnisch günstigste Aufstellen der Falten und beeinflußt somit den späteren Druckverlust des Filterelementes negativ. Eine solche Störung wurde bspw. auch das An- oder Aufbringen von durchgehenden Abstandshalterraupen, wie bspw. Kleberraupen zur Bildung von Versteifungselementen auf den biegeschlaffen Filterwerkstoff darstellen. Erfindungsgemäß ist diesem Nachteil entgegengewirkt. Die Versteifungselemente sind lediglich auf die späteren Faltenflächen des Filterwerkstoffes aufgebracht. Insbesondere bei ausgehärteten Versteifungselementen sind die späteren Faltenflächen ausgesteift und somit knickresistenter als der Ursprungswerkstoff. Hierdurch ergeben sich beim Aufstellen strömungstechnisch optimale Falten. In einer bevorzugten Ausgestaltung des Erfindungsgegenstandes ist vorgesehen, daß die Versteifungselemente durch Heißkleberraupen gebildet sind. Diese sind weiter bevorzugt vor Aufstellen der Falten vollständig erkaltet, womit die späteren Faltenflächen verfestigt sind. Weiter wird bevorzugt, daß die Anordnung der Versteifungselemente so vorgenommen ist, daß in jedem, durch zwei zugeordnete Flächen des Filterwerkstoffes gebildeten Filterzwickel nur ein Versteifungselement angeordnet ist. Hierdurch sind die Falten nur bis auf ein vorgegebenes Abstandsmaß zusammenschiebbar. Es ist nicht möglich die Falten dichter als die Höhe dieser Versteifungselemente zusammenzuschieben, auch wenn die nicht mit dem Filterwerkstoff vernetzte Seite der Kleberraupe rund und nicht flächig geformt ist. Durch diese Ausgestaltung ist eine Abstützung der Falten gegeneinander in Druckrichtung gewährleistet. Weiter wird vorgeschlagen, daß das Filterelement ein- oder beidseitig, lediglich an den Faltenkanten angebundene und im wesentlichen senkrecht zu den Faltenkanten verlaufende Versteifungselemente besitzt. Auch diese werden bevorzugt in Form von Heißkleberraupen gebildet. Durch diese Maßnahme ist die Abstützung der Falten gegeneinander in Zugrichtung gewährleistet. Dieses Merkmal ist sowohl für sich als auch in Kombination mit den zuvor beschriebenen Merkmalen von Bedeutung. So ist bei einer Kombination von jeweils einem Versteifungselement im Bereich eines jeden Filterzwickels und von ein- oder beidseitig, senkrecht zu den Faltenkanten verlaufenden Versteifungselementen die notwendige Abstützung sowohl in Zug- als auch in Druckrichtung gewährleistet. Das so gebildete Filterelement ist in sich stabil, was vor allem strömungstechnische Vorteile hat. Das über die Faltenkanten gelegte und dort eine innige Verbindung mit dem Filterwerkstoff eingehende Versteifungselement verhindert, daß die Falten weiter als die Höhe der sich zwischen den Falten befindlichen Versteifungselemente auseinandergezogen werden können. Hierzu wird weiter vorgeschlagen, daß beidseitig des Filterelementes im Hinblick auf die Filterflächen, d.h. bezüglich der gegenüberliegenden Knickzonen, auf diesem lediglich an den Faltenkanten angebundene und im wesentlichen senkrecht zu den Faltenkanten verlaufende Versteifungselemente angeordnet sind. Diese, Zugbelastungen aufnehmenden Versteifungselemente erstrecken sich somit bevorzugt quer zur Durchströmrichtung des Filterelementes und sind sowohl anström- als auch abströmseitig desselben angeordnet. Durch die erfindungsgemäße Ausgestaltung des Filterelementes ist in bezug auf ein bestimmtes Volumen eines Filters und der darin eingesetzten Fläche eines im wesentlichen biegeschlaffen Filterwerkstoffes der Druckverlust auf ein Minimum reduziert. So müssen bspw. weniger leistungsstarke Gebläse oder dergleichen zum Einsatz kommen. Weiter wirkt sich die erfindungsgemäße Ausgestaltung auch auf die Betriebskosten aus, da der geringere Druckverlust eine geringere Verlustleistung zufolge hat.

Die Erfindung betrifft weiter ein Verfahren zur Herstellung eines zick-zackförmig gefalteten Filterelementes aus einem im wesentlichen biegeschlaffen Filterwerkstoff, wie etwa Vlies oder Gewebe, wie bspw. Glasfasergewebe, wobei auf einer Filterfläche Versteifungselemente in Form von Kleberraupen aufgebracht werden. Hier wird zur Erzielung eines insbesondere strömungstechnisch günstiger ausgestalteten Filterelementes vorgeschlagen, daß die Faltelung des Filtermaterials erst nach Aushärten der aufgebrachten Kleberraupen vorgenommen wird. Bevorzugt werden hierbei Heißschmelzkleberraupen auf die späteren Faltenflächen des Filterwerkstoffes aufgebracht. Zufolge des Erkaltens sind die aufgebrachten Kleberraupen vor Aufstellen der Falten ausgehärtet, womit weiter die mit den Kleberraupen versehenen Faltenflächen versteift sind. Um nach einem Aufstellen strömungstechnisch optimale Falten zu erzielen, ist vorgesehen, daß eine Kleberraupe jeweils mit Abstand zu den Knickzonen beginnt bzw. endet. Somit ist jede Knickzone versteifungselementefrei gehalten. Die durch den Prägeprozeß gegenüber dem Ursprungswerkstoff geschwächten Knickzonen sind somit weniger biegeresistent als die versteiften Faltenflächen. Die den Abstand zwischen zwei sich gegenüberliegenden Faltenflächen bestimmenden Kleberraupen sind auf dem ungefalteten, ursprünglichen Filterwerkstoff derart angeordnet, daß diese als Versteifungselemente wechselweise ober- bzw. unterseitig, in regelmäßiger Abfolge über die Länge des Filterwerkstoffes auf den ungefalteten Filterwerkstoff aufgebracht werden. Durch diese wechselweise Anordnung der Versteifungselemente bzw. Kleberraupen ist gewährleistet, daß in jedem, durch zwei zugeordnete Flächen des Filtermaterials gebildeten Filterzwickel nur ein Versteifungselement angeordnet ist. Dieses gibt durch seine Höhe den Abstand zwischen den Filterflächen an. Abschließend wird das aufgefaltete Filterelement bevorzugt beidseitig im Hinblick auf die Filterflächen, d.h. bezüglich der gegenüberliegenden Knickzonen, mit im wesentlichen senkrecht zu den Faltenkanten verlaufenden Versteifungselementen versehen, welche eine innige Verbindung mit den Faltenkanten eingehen. Somit ist die notwendige Abstützung der Falten gegeneinander sowohl in Zug- als auch in Druckrichtung gewährleistet, so daß sich der Druckverlust eines Filterelementes nicht durch Verschiebungen einzelner Falten relativ zueinander erhöhen kann.

Die Erfindung ist nachstehend anhand der beigefügten Zeichnung, welche lediglich ein Ausführungsbeispiel darstellt, näher erläutert. Es zeigt:
- Fig. 1: ein Filterwerkstoff in Form einer Bahn- oder Mattenware zur Bildung eines erfindungsgemäßen Filterelementes mit wechselweise ober- bzw. unterseitig aufgebrachten Versteifungselementen in Form von Kleberraupen;
- Fig. 2: ein stark vergrößerte Schnittdarstellung gemäß der Linie II-II in Fig. 1;
- Fig. 3: eine der Fig. 2 entsprechende Schnittdarstellung, jedoch nach einer Auffaltelung des Filterwerkstoffes, wobei die Versteifungselemente als Abstandshalter dienen;
- Fig. 4: eine perspektivische Darstellung des aufgefalteten Filterelementes nach Aufbringen weiterer beidseitig, bezüglich der gegenüberliegenden Knickzonen angeordneten, senkrecht zu den Faltenkanten verlaufenden Versteifungselementen;
- Fig. 5: eine der Fig. 3 entsprechende Schnittdarstellung, jedoch den Endzustand des Filterelementes gemäß Fig. 4 betreffend.

Dargestellt und beschrieben ist ein Filterelement 1 und ein Verfahren zur Herstellung eines solchen Filterelementes 1.

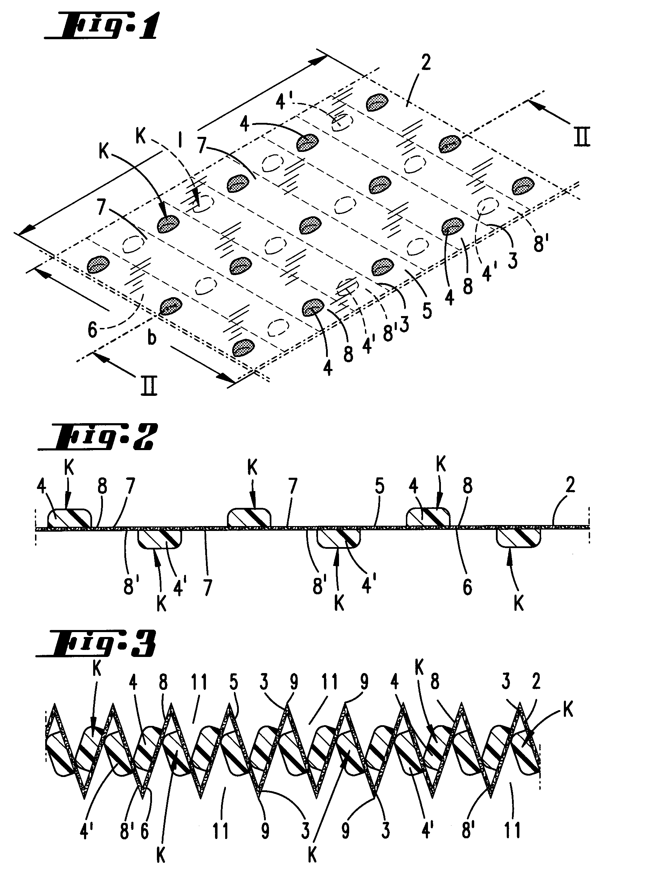

Letzteres besteht aus einem im wesentlichen biegeschlaffen Filterwerkstoff 2, wie etwa Vlies oder Gewebe, wie bspw. Glasfasergewebe. Dieser Filterwerkstoff 2 liegt in üblicher Form als Bahn- oder Mattenwaren vor. Um in Verhältnis zur typischen Querschnittsfläche eines anwendungstypischen Strömungskanales eine große Filterfläche zu erzielen, wird ein solcher Filterwerkstoff 2 bekannterweise zu einem Paket verarbeitet Hierzu wird der Filterwerkstoff 2 plissiert, wobei dieses entweder durch sogenannte Messerfaltung, bei denen der Filterwerkstoff 2 mittels zweier Platten in den späteren Faltenenden um ca. 180° umgebogen wird, oder, wie bevorzugt, durch sogenanntes Prägefalten, bei dem der Filterwerkstoff 2 in den späteren Knickstellen der Falten lediglich durch starken Druck verändert wird, durchgeführt. Die Knickzonen sind in der, den Filterwerkstoff 2 in der gestreckten Lage darstellenden Fig. 1 mit der Bezugsziffer 3 gekennzeichnet. Es ist zu erkennen, daß diese Knickzonen 3 senkrecht zur Längserstreckung des Filterwerkstoffes 2 ausgerichtet sind.

Damit die späteren Falten sich im Luftstrom nicht aneinanderlegen, wird der Filterwerkstoff 2 mit Abstandshaltern bildenden Flächen-Versteifungselementen 4, 4' versehen.

Diese Versteifungselemente 4 und 4' sind in dem gezeigten Ausführungsbeispiel in Form von Heißkleberraupen wechselweise auf der Oberseite 5 (Versteifungselemente 4) und der Unterseite 6 (Versteifungselemente 4'), in regelmäßiger Abfolge über die Länge l des Filterwerkstoffes 2 auf dem ungefalteten Filterwerkstoff 2 aufgebracht. Die Anordnung ist weiter so gewählt, daß jede, ein Versteifungselement 4 bzw. 4' bildende Kleberraupe K mit Abstand zu den angrenzenden Knickzonen 3 beginnt bzw. endet, womit jeweils zwischen einem oberseitigen Versteifungselement 4 und einem unterseitigen Versteifungselement 4' -bezogen auf die Längserstreckung des Filterwerkstoffes 2- ein unversteifter, sich beidseitig der Knickzone 3 erstreckender, im wesentlichen biegeschlaffer Bereich 7 verbleibt. Demzufolge ist jeder späteren Faltenfläche 8, 8 ' ein Versteifungselement 4, 4' zugeordnet.

Wie insbesondere aus Fig. 1 zu erkennen, ist erfindungsgemäß jede zweite Faltenfläche 8 mit einer das Versteifungselement 4 bildenden Kleberraupe K versehen. Die zwischen zwei Faltenflächen 8 gebildete Faltenfläche 8' besitzt unterseitig jeweils eine ein Versteifungselement 4, bildende Kleberraupe K. Diese Kleberraupen K sind jeweils mittig auf der jeweiligen Faltenfläche 8 bzw. 8' -bezogen auf die Längserstreckung des Filterwerkstoffes- angeordnet.

Die Anordnung ist weiter so gewählt, daß über die Breite b des Filterwerkstoffes 2 mehrere, mit Abstand zueinander angeordnete Reihen von Versteifungselementen 4 und 4' auf dem Filterwerkstoff 2 ober- bzw. unterseitig aufgebracht sind.

Die Auffaltelung des Filterwerkstoffes 2 zu einem zick-zackförmig gefalteten Filterelement 1 erfolgt erst nach Erkalten der aufgebrachten Kleberraupen K. Durch dieses Erkalten und der damit einhergehenden Verfestigung der Versteifungselemente 4 und 4' werden die späteren Faltenflächen 8 und 8' versteift und sind somit knickresistenter als der ursprüngliche Filterwerkstoff 2. Somit ist die Asymmetrie zwischen den späteren Knickzonen, die durch den Prägeprozeß gegenüber dem Filterwerkstoff 2 geschwächt und somit weniger biegeresistent verändert wurden, und den späteren Faltenflächen 8 und 8' vor dem Aufstellen der Falten erhöht. Hierdurch ergeben sich beim Aufstellen strömungstechnisch optimale Falten.

Dieses Aufstellen der Falten wird dadurch erzielt, daß der mit den Prägungen versehene Filterwerkstoff 2 gegen einen Widerstand geschoben wird und jeweils etwa um die Faltenhöhe - Abstand zweier Prägungen zueinander - quer zur Schubrichtung ausweicht. Dadurch, daß zwischen zwei benachbarten Faltenflächen 8 und 8' jeweils nur eine Kleberraupe K als Abstandshalter/Versteifungselement für die jeweilige Faltenfläche vorgesehen ist, ist ein Zusammenschieben der Falten nur bis zur Höhe der Kleberraupen K ermöglicht. Diese stützten sich mit ihrer freien Oberfläche gegen die gegenüberliegende Faltenfläche 8 bzw. 8' ab, womit eine Abstützung der Falten gegeneinander in Druckrichtung gewährleistet ist. Diese sichere Abstützung in Druckrichtung ist auch weiter gewährleistet, wenn die nicht mit dem Filterwerkstoff 2 vernetzte Seite der Kleberraupe K rund und nicht flächig geformt ist.

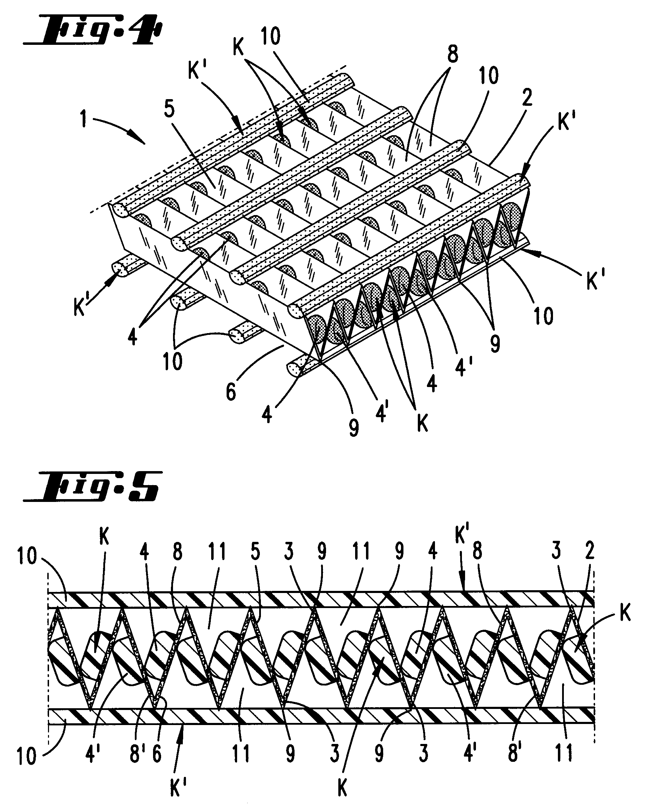

Um zu verhindern, daß die gebildeten Falten weiter als die Höhe der sich zwischen diesen Falten befindlichen Kleberraupen K auseinandergezogen werden können, werden nach erfolgter Auffaltelung beidseitig im Hinblick auf die Filterflächen 5 und 6, d.h. bezüglich der gegenüberliegenden Knickzonen 3, lediglich an den Faltenkanten 9 angebundene und im wesentlichen senkrecht zu den Faltenkanten 9 verlaufende Versteifungselemente 10 aufgebracht. Diese Versteifungselemente 10 sind in Form von durchgehenden Heißschmelzkleberraupen K' über die Spitzen der Falten gelegt und gehen dort nach Erkalten eine innige Verbindung mit dem Filterwerkstoff 2 ein (vgl. hierzu Fig. 4 und 5).

Es ist somit ein in sich stabiles Filterelement 1 in Form eines Paketes gebildet, welches durch die Anordnung jeweils eines Versteifungselementes 4 bzw. 4' im Bereich eines zwischen zwei zugeordneten Faltenflächen 8 und 8' gebildeten Filterzwickels 11 und der Anordnung von im wesentlichen senkrecht zu den Faltenkanten 9 verlaufenden, die jeweiligen Falten untereinander verbindenden Versteifungselemente 10, eine sichere Abstützung der Falten gegeneinander sowohl in Zug- als auch in Druckrichtung besitzt, so daß sich der Druckverlust des Filterelementes 1 nicht durch Verschiebungen einzelner Falten relativ zueinander erhöhen kann.

Wesentlicher Vorteil der erfindungsgemäßen Ausgestaltung ist es, daß die Asymmetrie zwischen den späteren Knickzonen und den späteren Faltenflächen im Medium vor dem Aufstellen der Falten nicht geschwächt, sondern im Gegenteil gestärkt werden, womit strömungstechnisch optimale Falten erzielt werden.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhältlich mit einbezogen, auch zu dem Zweck, Merkmale dieser Unterlagen in Ansprüche vorliegender Anmeldung mit aufzunehmen.

## Patentansprüche

1. Filterelement (1) aus einem im wesentlichen biegeschlaffen Filterwerkstoff (2), wie etwa Vlies oder Gewebe, wie bspw. Glasfasergewebe, wobei der Filterwerkstoff (2) zick-zackförmig unter Ausbildung von Knickzonen (3) gefaltet ist und Flächen-Versteifungselemente (4, 4') etwa in Form von Kleberraupen (K) aufweist, dadurch gekennzeichnet, daß die Versteifungselemente (4, 4') die Knickzonen (3) aussparen.

2. Filterelement nach Anspruch 1 oder insbesondere danach, dadurch gekennzeichnet, daß die Versteifungselemente (4, 4') durch Heißkleberraupen (K) gebildet sind.

3. Filterelement nach einem oder mehreren der vorhergehenden Ansprüche oder insbesondere danach, dadurch gekennzeichnet, daß die Anordnung der Versteifungselemente (4, 4') so vorgenommen ist, daß in jedem, durch zwei zugeordnete Flächen (8, 8') des Filterwerkstoffes (2) gebildeten Filterzwickel (11) nur ein Versteifungselement (4, 4') angeordnet ist.

4. Filterelement nach einem oder mehreren der vorhergehenden Ansprüche oder insbesondere danach, dadurch gekennzeichnet, daß das Filterelement (1) ein- oder beidseitig, lediglich an den Faltenkanten (9) angebundene und im wesentlichen senkrecht zu den Faltenkanten (9) verlaufende Versteifungselemente (10) besitzt.

5. Filterelement nach einem oder mehreren der vorhergehenden Ansprüche oder insbesondere danach, dadurch gekennzeichnet, daß beidseitig des Filterelementes (1) im Hinblick auf die Filterflächen (5, 6), d.h. bezüglich der gegenüberliegenden Knickzonen (3), auf diesem lediglich an den Faltenkanten (9) angebundene und im wesentlichen senkrecht zu den Faltenkanten (9) verlaufende Versteifungselemente (10) angeordnet sind.

6. Verfahren zur Herstellung eines zick-zackförmig gefalteten Filterelementes (1) aus einem im wesentlichen biegeschlaffen Filterwerkstoff (2), wie etwa Vlies oder Gewebe, wie bspw. Glasfasergewebe, wobei auf einer Filterfläche (8, 8') Versteifungselemente (4, 4') in Form von Kleberraupen (K) aufgebracht werden, dadurch gekennzeichnet, daß die Faltelung des Filterwerkstoffes (2) erst nach Aushärten der aufgebrachten Kleberraupen (K) vorgenomen wird.

7. Verfahren nach Anspruch 6 oder insbesondere danach, dadurch gekennzeichnet, daß eine Kleberraupe (K) jeweils mit Abstand zu den Knickzonen (3) beginnt bzw. endet.

8. Verfahren nach einem oder mehreren der Ansprüche 6 bis 7 oder insbesondere danach, dadurch gekennzeichnet, daß die Kleberraupen (K) als Versteifungselemente (4, 4') wechselweise ober- bzw. unterseitig, in regelmäßiger Abfolge über die Länge (1) des Filterwerkstoffes (2) auf dem ungefalteten Filterwerkstoff (2) aufgebracht werden.
